# EUROPÄISCHE PATENTSCHRIFT

(11) **EP 0 432 718 B1**
(45) Veröffentlichungstag und Bekanntmachung des Hinweises auf die Patenterteilung: **12.03.1997**
(21) Anmeldenummer: 90123795.8
(22) Anmeldetag: 11.12.1990
(51) Int. Cl.: C08J 3/12, C08L 27/18

(54) **Verfahren zur Herstellung eines agglomerierten Formpulvers aus Polytetrafluorethylen und hydrophoben Füllstoffen**
Process for producing an agglomerated moulding powder from polytetrafluoroethylene and hydrophobic fillers
Procédé pour préparer des poudres agglomérées de polytétrafluoroéthylène et de charges hydrophobes

(30) Priorität: 15.12.1989 DE 3941368
(43) Veröffentlichungstag der Anmeldung: 19.06.1991
(73) Patentinhaber: Dyneon GmbH, 84504 Burgkirchen (DE)
(72) Erfinder: Zipplies, Tilman, Dr., W-8263 Burghausen (DE)

(56) Entgegenhaltungen:
- EP-A- 0 198 375
- GB-A- 1 172 722
- Database Chemical Abstracts (Host: STN), 1979 ref no. 88(14): 91313k, Columbus, Ohio, US; & JP-A-52114710

## Beschreibung

Die Erfindung betrifft ein Verfahren zur Herstellung eines agglomerierten Formpulvers, bestehend aus Agglomeraten eines nicht aus der Schmelze verarbeitbaren Tetrafluorethylen-Polymeren mit mindestens einem feinzerteilten Füllstoff aus einem hydrophoben Material, wobei der Füllstoff in den agglomerierten Teilchen in weitgehend gleichmäßiger Verteilung enthalten ist, durch Vormischen eines feinzerteilten, granularen Tetrafluorethylen-Polymerpulvers und des Füllstoffs, Suspendieren der Mischung in einem flüssigen Agglomeriermedium aus Wasser und einer das Tetrafluorethylen-Polymerpulver benetzenden, in Wasser höchstens bis zu 15 Gew.-% löslichen organischen Flüssigkeit und Agglomeration unter Rühren.

Rohpolymerisate des Tetrafluorethylens, die nach dem Verfahren der Suspensionspolymerisation in wäßriger oder wäßrig-organischer Phase erhalten werden, besitzen ein niedriges Schüttgewicht und sind praktisch nicht fließfähig, was ihre Verarbeitung in automatischen Anlagen für die Preß-Sinter-Technik außerordentlich erschwert.

Es ist bekannt, daß man das durch Suspensionspolymerisation erzeugte Polytetrafluorethylen (PTFE) zwecks Verbesserung seines Fließverhaltens und Erhöhung des Schüttgewichts einem Agglomerationsprozeß in einem wäßrig organischen Medium unterwirft, nachdem das Rohpolymerisat zunächst auf eine bestimmte kleinere, aber einheitliche Teilchengröße durch Mahlen zerkleinert worden ist. Man kann auch füllstoffhaltige Mischungen mit hoher Fließfähigkeit und erhöhtem Schüttgewicht erhalten, wenn dieser Prozeß in Gegenwart von Füllstoffen durchgeführt wird (US-PS 3 781 258). Dabei wird der Füllstoff mehr oder weniger homogen in das agglomerierte Korn eingebaut. Bei Füllstoffen mit hydrophober Oberfläche, wie zum Beispiel Ruß oder Kohlepulver, ist dieses Verfahren mit zufriedenstellenden Ergebnissen durchführbar, während hingegen bei Füllstoffen mit hydrophiler Oberfläche, wie zum Beispiel Metallpulver oder -flocken, erhebliche Anteile an eingesetztem Füllstoff in dem wäßrig-organischen Agglomeriermedium verbleiben und so dem Agglomerationsprozeß verlorengehen. Daher sind eine ganze Reihe von Verfahren bekanntgeworden, bei denen entweder der Füllstoff vor der Agglomeration einer hydrophobierenden Behandlung unterzogen oder ein hydrophobierendes Mittel während des Agglomerationsprozesses in der flüssigen Phase zugegen ist. Repräsentative Beispiele für solche Zusätze sind Aminosilane und/oder Silikone, aliphatische Carbonsäuren oder deren Salze mit Kationen der Gruppe II des periodischen Systems, Aminosilane in Kombination mit Carbonsäure oder mit anionischen oberflächenaktiven Mitteln, wie Natriumlaurylsulfat, ferner auch solche Zusätze, die aus Alkansulfonat oder Alkylsulfat allein bestehen (wie beschrieben in den US-Patentschriften 3 915 916, 3 929 721, 3 980 596, 4 370 436 und 4 665 113).

Aus der JP-A-52 114 710 ist es bekannt, zunächst eine wäßrige Dispersion von kolloidalen Polytetrafluorethylen-Partikeln und hydrophilen oder hydrophoben Festteilchen zu einer wäßrigen Suspension koagulierter Partikel zu verarbeiten. In dieser Suspension, die ein Tensid enthalten kann, werden dann faserförmige Polytetrafluorethylen-Teilchen dispergiert, wobei eine Aufschlämmung erhalten wird, die im Naßverfahren zu einem Blatt verformt wird. Man erhält so papierähnliche Polytetrafluorethylen-Blätter, die für Filter oder Isolationsmaterial eingesetzt werden.

Wenn hingegen auch die Agglomeration hydrophober Füllstoffe solcher Vorbehandlungsschritte oder Zusätze nicht bedarf, so ist doch auch hier die Herstellung eines völlig homogenen Kornaufbaus zwischen PTFE und dem Füllstoff bis in die äußeren Zonen des agglomerierten Korns ein Problem. Es hat sich nämlich herausgestellt, daß auf der Oberfläche des agglomerierten Teilchens eine beträchtliche Menge an Füllstoff abgelagert ist, deren Konzentration weit über das Verhältnis Füllstoff zu PTFE im Innern dieses Teilchens hinausgeht. Dadurch entsteht auf einem wichtigen Einsatzgebiet solcher agglomerierter PTFE-Füllstoff-Formpulver, nämlich der Preß-Sinter-Verarbeitung mit automatischer Befüllung der Vorform, ein beträchtlicher Nachteil. Es wird eine erhebliche Herabsetzung von Zugfestigkeit und Reißdehnung an Formteilen beobachtet, die aus solchen Formpulvern hergestellt worden sind, was wohl auf ein ungenügendes Zusammensintern der PTFE-Teilchen wegen der dazwischenliegenden "Füllstoff-Hülle" zurückzuführen ist. Zwar ist es möglich, zumindest einen Teil dieses überschüssigen Füllstoffs durch Schütteln und Absieben zu entfernen, jedoch stellt dies einen umständlichen und wegen des Zeitaufwands und der Staubbildung lästigen Arbeitsschritt dar. Somit bestand die Aufgabe, diesen Mißstand zu beheben.

Diese Aufgabe wird erfindungsgemäß gelöst durch ein Verfahren der eingangs genannten Art, das dadurch gekennzeichnet ist, daß man nach Beendigung des Agglomeriervorgangs die gebildeten Agglomerate in einem flüssigen Medium unter waschartiger Bewegung mit einem oberflächenaktiven Mittel in einer Menge behandelt, die ausreichend ist, eine Benetzung der gebildeten Agglomerate zu bewirken.

Das erfindungsgemäße Verfahren bezieht sich auf die Agglomerierung von nicht aus der Schmelze verarbeitbaren Tetrafluorethylen-Polymeren. Unter diesem Begriff "nicht aus der Schmelze verarbeitbar" versteht man in erster Linie das Homopolymere, nämlich das Polytetrafluorethylen selbst, daneben aber auch die sogenannten "modifizierten" Tetrafluorethylen-Polymeren, das heißt solche Polymerisate des Tetrafluorethylens, die ein fluoriertes oder bevorzugt perfluoriertes Comonomeres in einer so geringen Menge - meist ≤ 2 Mol-%, vorzugsweise ≤ 0,5 Mol-% - enthalten, so daß der Charakter des Polymeren als "nicht aus der Schmelze verarbeitbar" erhalten bleibt. Solche Comonomere sind beispielsweise Chlortrifluorethylen, Hexafluorisobutylen, 1-Perfluorbuten, Perfluoralkylperfluorvinylether mit einem Perfluoralkylrest von 1 bis 5 C-Atomen, insbesondere Perfluorpropylperfluorvinylether und Hexafluorpropylen. Solche Tetrafluorethylen-Polymere weisen eine scheinbare Schmelzviskosität von mindestens 1 · 10⁸ Pa s bei 380 °C auf, gemessen nach dem Kriechtest [Ajroldi et al., J. Appl. Polym. Sci., 14 (1970) Seite 79 ff.]. Soweit in dieser Beschreibung die Abkürzung PTFE gebraucht wird, bezieht sie sich auf alle diese Arten von nicht aus der Schmelze verarbeitbaren Tetrafluorethylen-Polymeren. Für den Agglomerationsprozeß zu einem PTFE-Formpulver von hohem Schüttgewicht und guter Fließfähigkeit werden Suspensionspolymerisate des Tetrafluorethylens eingesezt, wobei das nach diesem Verfahren erhaltene PTFE, das als Rohpolymerisat eine mittlere Teilchengröße von etwa 1 200 bis 800 µm und höher besitzt, einem der bekannten Zerkleinerungsprozesse für PTFE unterworfen - beispielsweise Mahlen in einer Hammermühle oder Naßschneiden - und dabei auf eine mittlere Teilchengröße von 20 bis 100 µm feinzerteilt wird. Desgleichen sollen die eingesetzten Füllstoffe in feinzerteilter Form vorliegen, das heißt etwa eine mittlere Teilchengröße besitzen wie das gemahlene PTFE. Das Agglomerationsverfahren selbst ist dem Fachmann bekannt, beispielsweise aus den US-Patentschriften 3 527 857 und 3 781 258. In diesem Verfahren wird das mit den Füllstoffen vorgemischte PTFE-Pulver in einem flüssigen Agglomeriermedium suspendiert, das aus Wasser und einer organischen Flüssigkeit besteht, wobei diese organische Flüssigkeit imstande sein muß, das PTFE-Pulver zu benetzen und außerdem in Wasser höchstens bis zu 15 Gew.-%, vorzugsweise bis zu 3 Gew.-%, löslich sein darf. Solche organischen Flüssigkeiten sind beispielsweise Kohlenwasserstoffe oder deren Gemische, zum Beispiel n-Heptan, n-Octan, Benzinfraktionen, insbesondere solche mit Siedepunkten von 80 bis 150 °C, Cyclohexan, Benzol, Toluol; halogenierte Kohlenwasserstoffe, beispielsweise Perchlorethylen, Chloroform, Trichlorethylen, Tetrachlorkohlenstoff oder Chlorfluorkohlenwasserstoffe, wie 1,1,2-Trifluor-l,2,2-trichlorethan. Das Verhältnis von Wasser zu Feststoff, das heißt zu der Summe von PTFE-Pulver und Füllstoff, soll im Bereich von 3 : 1 bis 1 : 3, das Verhältnis von Feststoff zu organischer Flüssigkeit im Bereich von 1 : 1 bis 10 : 1 Gewichtsteilen liegen. Der Anteil des Füllstoffs in dem Gemisch mit PTFE liegt im Bereich von 5 bis 50, vorzugsweise von 10 bis 30 Vol.-%, bezogen auf das Volumen des Gemisches. Das suspendierte Gemisch aus PTFE und Füllstoff wird dann zur Agglomerierung längere Zeit gerührt, die Mischung kann dabei auf Raumtemperatur gehalten oder auch auf Temperaturen, die unter oder am Siedepunkt der eingesetzten organischen Flüssigkeit liegen, erwärmt werden; vorzugsweise wird bei 40 bis 50 °C gearbeitet. Die Rührenergie, die Zeitdauer und Temperatur sowie insbesondere das Verhältnis von organischer Flüssigkeit zu Feststoff bestimmen den Grad der Agglomeration, der durch geeignete Wahl dieser Größen eingestellt werden kann.

Die Beendigung des Agglomerationsvorganges ist daran erkennbar, daß die gebildeten Agglomerate keine Zunahme des Teilchendurchmessers mehr zeigen, was beispielsweise durch Beugungsmessungen mit Laserstrahlen ermittelt werden kann.

Die Behandlung der gebildeten Agglomerate nach dem erfindungsgemäßen Verfahren erfolgt in einem flüssigen Medium, dem das oberflächenaktive Mittel zugesetzt wird. Dabei ist das Verhältnis von Agglomerat zu flüssigem Medium nicht kritisch. Die zu behandelnden Agglomerate können in dem flüssigen Medium suspendiert sein, es kann aber auch bereits ausreichend sein, sie nach Abtrennung vom flüssigen Agglomeriermedium mit einer Lösung des oberflächenaktiven Mittels zu besprühen. Die Behandlung wird unter einer waschartigen Bewegung durchgeführt. Sie sollte im allgemeinen mindestens 5 Minuten betragen, nach oben ist diese Zeitdauer nicht begrenzt.

Unter waschartiger Bewegung soll dabei irgendeine Art von Bewegung verstanden werden, die milde Scherkräfte zwischen flüssigem Medium und Agglomeraten zur Wirkung und beide in innige Berührung bringt. Dies kann durch Rühren, Umwälzen oder Mischen mit milder Scherwirkung oder durch Schütteln im Gefäß oder Rotationsbewegungen des Gefäßes bewirkt werden. Auch kann die waschartige Bewegung in einem Aufwirbeln der Agglomerate in dem flüssigen Medium, das die oberflächenaktive Substanz enthält, oder im Absprühen dieser Agglomerate mit einem Strahl des genannten flüssigen Mediums bestehen.

Nach dieser Nachbehandlung wird die gesamte Suspension oder Aufschlämmung über eine geeignete Trennvorrichtung, beispielsweise ein Sieb, abgelassen, wobei das Korn auf der Trennvorrichtung verbleibt, während der überschüssige Füllstoff mit dem flüssigen Behandlungsmedium entfernt wird.

Die Zugabe des oberflächenaktiven Mittels kann auch unmittelbar nach beendeter Agglomeration zum flüssigen Agglomeriermedium erfolgen, wobei entweder vorher eine Abtrennung der organischen Flüssigkeit erfolgt oder aber diese organische Flüssigkeit im flüssigen Medium verbleibt. Schließlich können die Agglomerate vom flüssigen Agglomeriermedium durch Sieben, Abfiltrieren und ähnliche Trennmethoden abgetrennt werden und dann in Wasser oder einem überwiegend wäßrigen Medium suspendiert und nach Zugabe des oberflächenaktiven Mittels behandelt werden. Wiederum kann der organische Anteil der Agglomerierflüssigkeit, der sich nach dem Agglomerationsprozeß überwiegend in den agglomerierten Körnern befindet, bei der Abtrennung mitentfernt werden, beispielsweise durch Erwärmen, oder bei der Behandlung im Korn verbleiben.

Die Konzentration des oberflächenaktiven Mittels ist nicht sehr kritisch. Sie muß zumindest so groß sein, daß die Oberfläche der gebildeten Agglomerate vom flüssigen Behandlungsmedium benetzt wird. Daher wird die Konzentration im Bereich von 30 bis 1000 ppm, vorzugsweise bei 50 bis 500 ppm, liegen.

Als oberflächenaktive Mittel können nicht-ionische, anionenaktive und kationenaktive Tenside eingesetzt werden.

Nicht-ionische Tenside, die für diesen Zweck in Frage kommen, sind insbesondere folgende:

Alkylphenoloxethylate der allgemeinen Formel 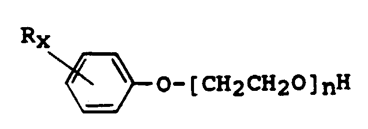 mit n = 4 bis 20, wobei R ein Alkylrest mit 4 bis 20 C-Atomen ist, der am Benzolring ein- bis dreimal substituiert sein kann (x = 1 bis 3), und Ethylenoxideinheiten zum Teil durch Propylenoxideinheiten ersetzt sein können;
Fettalkoholoxethylate der allgemeinen Formel

R-O-[CH₂CH₂O]ₙH

mit n = 4 bis 20, wobei R ein Alkylrest mit 4 bis 20 C-Atomen ist, der auch teilweise fluoriert oder perfluoriert sein kann, und wobei Ethylenoxideinheiten zum Teil durch Propylenoxideinheiten ersetzt sein können; sowie Ethylenoxid-Propylenoxid-Blockcopolymerisate der allgemeinen Formel 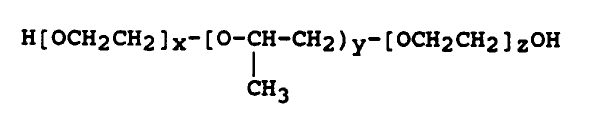 mit x = 2 bis 20, y = 10 bis 50 und z = 2 bis 20. Ebenso sind verwendbar die nicht-ionischen Kondensationsprodukte von Aminen, insbesondere Fettaminen, oder von Fettsäureestern mit Ethylenoxid oder Gemischen von Ethylen- und Propylenoxid.

Als nicht-ionische Tenside sind ferner Aminoxide geeignet, die die allgemeinen Formeln R¹R²R-N→ O, R¹(R)₂-N→O besitzen. Darin bedeuten R¹ und R² einen Methyl- oder Ethylrest, R steht für einen längerkettigen Alkylrest mit 10 bis 18 C-Atomen. Aminoxide der erstgenannten Formel sind bevorzugt.

Als anionenaktive Tenside, die im Rahmen des erfindungsgemäßen Verfahrens eingesetzt werden können, seien genannt Alkansulfonate und Alkylsulfate, Alkylbenzolsulfonate und Alkylarylsulfate, Salze höherer Fettsäuren, Salze von Alkanphosphonsäuren, Phosphorsäurealkyl- oder -alkylarylester, oxalkylierte Sulfonsäuren oder deren Salze sowie Sulfobernsteinsäureester oder deren Salze. Insbesondere sind auch die perfluorierten oder teilfluorierten Derivate dieser Verbindungen geeignet, beispielsweise Salze von Perfluoralkansäuren oder Perfluoralkansulfonsäuren. Alle diese anionenaktiven Tenside liegen vorzugsweise in Form ihrer Alkali- oder Ammoniumsalze vor.

Schließlich können auch kationenaktive Tenside, wie die Ammoniumsalze langkettiger sekundärer und tertiärer Amine, als oberflächenaktive Mittel im erfindungsgemäßen Verfahren Anwendung finden.

Vorzugsweise kommen aber nicht-ionische oder anionenaktive Tenside in Betracht. Auch Gemische von Vertretern dieser beiden Gruppen sind einsetzbar.

Hydrophobe Füllstoffe, die mit PTFE ohne hydrophobierende Vorbehandlung gemeinsam agglomeriert und dann nach dem erfindungsgemäßen Verfahren behandelt werden können, sind Kohle und Graphit in ihren verschiedenen physikalischen Erscheinungsformen, wie Pulver, Fasern, Flocken oder Körner, ferner Ruß, Koksmehl und dergleichen. Weitere Klassen von hydrophoben Füllstoffen sind Schwermetallsulfide, wie Molybdänsulfid oder Cadmiumsulfid, ferner hochtemperaturbeständige Kunstharze in Form von Pulvern, Fasern oder Flocken, wie zum Beispiel Polyetherketone, Polyethersulfone, Polyarylensulfide, Polyimide oder aromatische Polyamide. Ferner sind auch gemeinsame Agglomerate von bestimmten hydrophoben organischen Pigmenten und PTFE der Behandlung zugänglich, wie zum Beispiel Agglomerate aus PTFE und Phthalocyaninen. Alle diese hydrophoben Füllstoffe haben gemeinsam, daß sie im flüssigen Agglomeriermedium von der mit Wasser im wesentlichen nicht mischbaren organischen Phase benetzt werden.

Der wesentliche Vorteil des nach dem erfindungsgemäßen Verfahren behandelten agglomerierten PTFE-Füllstoff-Produktes besteht darin, daß nach dem Preß-Sinter-Verfahren hergestellte Formteile eine erheblich verbesserte Reißfestigkeit und Reißdehnung aufweisen, wie auch der weiter unten durchgeführte Vergleichsversuch zeigt. Schält man von Blöcken, die aus derart gefüllten Agglomeraten gepreßt wurden, Schälfolien ab, so weisen diese eine erheblich verbesserte Gasdichtigkeit auf. Schließlich wird auch die Staubbildung des agglomerierten Produktes, hervorgerufen durch den überschüssigen Füllstoff, verringert und Verunreinigungen von Verarbeitungsmaschinen werden vermieden.

Die Erfindung wird durch folgende Beispiele erläutert:

### Beispiel 1

Die Agglomerierung von PTFE und Füllstoff erfolgte in einem Gefäß aus Glas mit 20 cm Durchmesser, das mit einem dreiflügeligen Propellerrührer bestückt und mit 4500 ml Wasser von 50 °C gefüllt war. Als organische Flüssigkeit wurde Benzin mit einem Siedebereich von 80 bis 110 °C in einer Menge von 900 ml verwendet.

Als Tetrafluorethylenpolymeres wurde ein durch Suspensionspolymerisation erzeugtes Polytetrafluorethylen-Pulver eingesetzt, das vorher auf einen mittleren Durchmesser der Primärteilchen für die Agglomeration von etwa 20 µm aufgemahlen worden war. Als Füllstoff wurde Koksmehl mit einer mittleren Teilchengröße von 20 µm in einem Anteil von 25 Vol.-%, bezogen auf das Volumen des gesamten Feststoffs, verwendet. Für die Agglomeration wurden 2 kg einer homogenen Mischung aus diesem PTFE und dem genannten Füllstoff eingesetzt, die durch Trockenmischung hergestellt worden war.

Das Rühren wurde bei einer Umdrehungszahl von 1400 min⁻¹ begonnen und 30 min lang fortgesetzt. Nach der Entfernung des Benzins durch Erwärmen der flüssigen Phase wurde sodann der verbleibenden wäßrigen Phase ein mit durchschnittlich 9,5 Einheiten an Ethylenoxid umgesetztes Nonylphenol als oberflächenaktives Mittel in einer Menge hinzugegeben, daß sich eine Konzentration von 250 ppm ergab. Sodann wurde nach weiteren 15 min Rühren (Umdrehungszahl 500 min⁻¹) die Suspension über ein Sieb (Maschengröße 150 µm) getrennt, wobei die agglomerierten Teilchen auf der Sieboberfläche verblieben, während das Wasser und der überschüssige Füllstoff das Sieb passierten. Nach dem Waschen mit Wasser wurden die Agglomerate bei 280 °C getrocknet und in üblicher Weise nach der ASTM-Norm 1457 der Prüfung auf Reißfestigkeit und Reißdehnung unterzogen. Die erhaltenen Werte sind in Tabelle 1 verzeichnet.

### Beispiel 2

Es wurde gemäß Beispiel 1 verfahren, jedoch wurde als oberflächenaktives Mittel Sulfobernsteinsäuredidecylester in einer Konzentration von 250 ppm eingesetzt. Die erhaltenen Werte für Reißfestigkeit und Reißdehnung sind in Tabelle 1 gezeigt.

### Beispiele 3 bis 7

Die Agglomerierung erfolgte gemäß Beispiel 1, jedoch wurde als Füllstoff hier Kohlepulver mit einem mittleren Teilchendurchmesser von 20 µm in einem Anteil von 25 Vol.-%, bezogen auf das Volumen des gesamten Feststoffs, eingesetzt. Die Zugabe des Tensids erfolgte nach beendeter Agglomerierung. Das Gefäß wurde 15 min lang auf einer Rüttelapparatur in Bewegung gehalten. Danach wurde unter weiterer Bewegung das Benzin durch Erwärmen entfernt und die verbleibende Suspension über ein Sieb getrennt, wie in Beispiel 1 angegeben. Die Art des eingesetzten Netzmittels, dessen Konzentration und die mechanischen Eigenschaften des aus dem agglomerierten Produkt gewonnenen Prüfkörpers sind in Tabelle 1 zusammengestellt.

### Vergleichsbeispiele A und B

Die Agglomerierung wurde gemäß Beispiel 1 durchgeführt. Nach Beendigung des Rührens und Abtrennung des Benzins durch Erwärmung der flüssigen Phase wurde ohne weitere Behandlung das agglomerierte Produkt über ein Sieb abgetrennt und bei 280 °C getrocknet. Im Vergleichsbeispiel A wurde Koksmehl wie in Beispiel 1 bis 2, im Vergleichsbeispiel B Kohlepulver wie in Beispiel 3 bis 7 eingesetzt, jeweils in einem Anteil von 25 Vol.-%, bezogen auf das Volumen des gesamten Feststoffs. Die erhaltenen Werte sind in Tabelle 1 zusammengestellt.

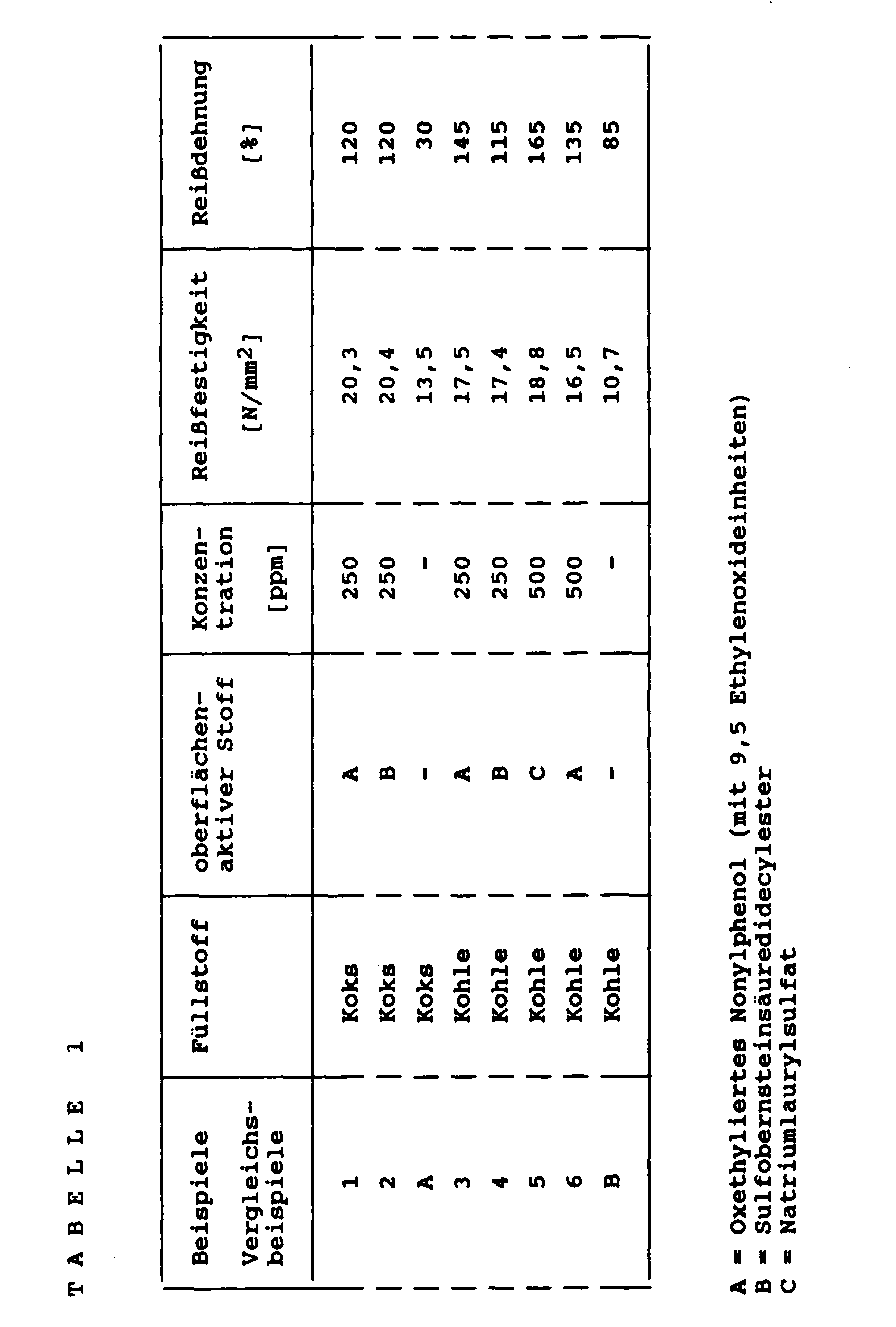

## Patentansprüche

1. Verfahren zur Herstellung eines agglomerierten Formpulvers
durch Vormischen
eines feinzerteilten, granularen, nicht aus der Schmelze verarbeitbaren Tetrafluorethylen-Polymers mit mindestens einem feinzerteilten Füllstoff aus einem hydrophoben Material,
Suspendieren der Mischung in einem flüssigen Agglomerationsmedium aus
Wasser und
einer das Tetrafluorethylen-Polymerpulver benetzenden, in Wasser höchstens bis zu 15 Gew.-% löslichen organischen Flüssigkeit,
Agglomeration unter Rühren, wobei der Füllstoff in den agglomerierten Teilchen in weitgehend gleichmäßiger Verteilung enthalten ist,
dadurch gekennzeichnet, daß man nach Beendigung des Agglomerationsvorgangs die gebildeten Agglomerate in einem flüssigen Medium
unter waschartiger Bewegung
mit einem oberflächenaktiven Mittel
in einer Menge, die ausreichend ist, eine Benetzung der gebildeten Agglomerate zu bewirken, behandelt.

2. Verfahren nach Anspruch 1, dadurch gekennzeichnet, daß das oberflächenaktive Mittel ein nicht-ionisches Tensid ist.

3. Verfahren nach Anspruch 1, dadurch gekennzeichnet, daß das oberflächenaktive Mittel ein anionisches Tensid ist.

4. Verfahren nach einem oder mehreren der Ansprüche 1 bis 4, dadurch gekennzeichnet, daß das oberflächenaktive Mittel in einer Konzentration von 30 bis 1000 ppm eingesetzt wird.

## Claims

1. A process for producing an agglomerated molding powder by premixing
a finely divided granular tetrafluoroethylene polymer not processible from the melt with at least one finely divided filler composed of a hydrophobic material,
suspending the mixture in a liquid agglomeration medium composed of
water and
an organic liquid which wets the tetrafluoroethylene polymer powder and is soluble in water to an amount of not more than 15% by weight,
agglomerating while stirring, the filler being contained in the agglomerated particles in substantially uniform dispersion,
which process comprises treating the agglomerates formed after completing the agglomeration process in a liquid medium
by means of washing-like agitation
with a surface-active agent
in an amount which is sufficient to effect a wetting of the formed agglomerates.

2. The process as claimed in claim 1, wherein the surface-active agent is a nonionic surfactant.

3. The process as claimed in claim 1, wherein the surface-active agent is an anionic surfactant.

4. The process as claimed in one or more of claims 1 to 4, wherein the surface-active agent is used in a concentration of 30 to 1000 ppm.

## Revendications

1. Procédé de préparation d'une poudre à mouler agglomérée par mélange préalable
d'un polymère de tétrafluoréthylène n'étant pas apte à la mise en oeuvre à l'état fondu, granulé, finement divisé, avec au moins une charge finement divisée d'une matière hydrophobe,
par mise en suspension du mélange dans un milieu d'agglomération liquide constitué
d'eau et
d'un liquide organique mouillant la poudre de tétrafluoréthylène polymère, lequel liquide est soluble dans l'eau dans une quantité jusqu'à 15% en poids au maximum,
par agglomération sous agitation, la charge dans les particules agglomérées étant contenue dans une distribution essentiellement homogène,
caractérisé en ce que, après avoir terminé le processus d'agglomération, on traite les agglomérats formés dans un milieu liquide
par un mouvement de type lavage
à l'aide d'un agent de surface
dans une quantité suffisante à induire le mouillage des agglomérats formés.

2. Procédé selon la revendication 1, caractérisé en ce que l'agent de surface est un agent tensio-actif non-ionique.

3. Procédé selon la revendication 1, caractérisé en ce que l'agent de surface est un agent tensio-actif anionique.

4. Procédé selon une ou plusieurs des revendications 1 à 4, caractérisé en ce que l'agent tensio-actif est utilisé en une concentration de 30 à 1000 ppm.
